Europäisches Patentamt

European Patent Office

Office européen des brevets

(19)

(11) Veröffentlichungsnummer : **0 178 291 B1**

(12) **EUROPÄISCHE PATENTSCHRIFT**

(45) Veröffentlichungstag der Patentschrift :
21.12.88

(21) Anmeldenummer : 85890238.0

(22) Anmeldetag : 27.09.85

(51) Int. Cl.⁴ : **G 03 B 23/04**, G 03 B 23/00

(54) Dia-Magazin.

(30) Priorität : 09.10.84 AT 3211/84

(43) Veröffentlichungstag der Anmeldung :
16.04.86 Patentblatt 86/16

(45) Bekanntmachung des Hinweises auf die Patenterteilung : 21.12.88 Patentblatt 88/51

(84) Benannte Vertragsstaaten :
AT DE FR

(56) Entgegenhaltungen :
AT—B— 215 181
CH—A— 608 896
DE—A— 2 127 619
GB—A— 2 006 979
US—A— 2 525 564
US—A— 3 773 414

(73) Patentinhaber : **Patent-Treuhand-Gesellschaft für
elektrische Glühlampen mbH
Hellabrunner Strasse 1
D-8000 München 90 (DE)**

(72) Erfinder : **Pobenberger, Ernst
Mittergasse 1
A-2484 Weigelsdorf (AT)**

(74) Vertreter : **Hamburger, Walter A., Dipl.-Ing.
Patentanwaltskanzlei HAMBURGER Postfach 96
Mahlerstrasse 9
A-1015 Wien (AT)**

Jouve, 18, rue St-Denis, 75001 Paris, France

## Beschreibung

Die Erfindung betrifft ein Diamagazin mit einem im wesentlichen schachtelförmigen, oben offenen Gehäuse, für ein Diavorführgerät mit einer einen horizontal betätigten Diaschieber aufweisenden Bildwechseleinrichtung, mit einer etwa in Längsmitte einer Längswand des Gehäuses ausgebildeten und der Dicke eines Diapositives angepaßten Durchtrittsöffnung, mit einer Ablenkeinrichtung, welche eine schräg zur Längsmittelebene des Gehäuses verlaufende Ablenkfläche aufweist und der Durchtrittsöffnung gegenüberliegt, und mit einer zu beiden Seiten der Ablenkeinrichtung angeordneten Andruckeinrichtung für Diapositive.

Herkömmliche Diamagazine weisen einen Rahmen mit einer Anzahl hintereinander angeordneter Fächer für jeweils ein Diapositiv auf, wobei der Rahmen mit Gleitflächen sowie einer Verzahnung zum Transport durch das Vorführgerät versehen ist.

Anderseits werden Diapositive üblicherweise in Schachteln oder Kassetten aufbewahrt, sodaß vor der Diavorführung die Diapositive der Schachtel entnommen und in der richtigen Reihenfolge in das Magazin eingesetzt sowie nach der Vorführung dem Magazin entnommen und wieder in die Schachtel gegeben werden müssen. Diese Vorgangsweise ist mühselig und zeitraubend und erfordert bei Vorführung von einer größeren Anzahl Diapositiven mehrere Magazine oder eine Unterbrechung der Vorführung. Das Einsetzen der Diapositive in die Fächer ist nicht immer einfach, weshalb auch schon eigene Befüllbehelfe vorgeschlagen worden sind.

Weiter ist nachteilig, daß es mehrere Typen von Diarähmchen sowie von Diamagazinen gibt, wobei nicht jedes Rähmchen in die Fächer jedes Magazines paßt, weil sie unterschiedliche Dicke (1,0 bis 3,2 mm) aufweisen.

Desgleichen ist die Herstellung der Magazine aufgrund der Fächer und Verzahnung aufwendig. Um die Baulänge der Magazine kurz zu halten, müssen die Fachwände sehr dünn sein, sodaß sie leicht brechen können.

Aus der US-PS 2 525 564 ist zwar eine Bildwechseleinrichtung für ein Diavorführgerät bekannt, mit dem das Problem der Vorführung unterschiedlich dicker Diapositive gelöst werden soll. Hiezu ist eine im Gerät angeordnete Federplatte vorgesehen und zu beiden Seiten des Diaschiebers je ein gerätefestes Magazin mit einer federbelasteten Andruckeinrichtung für die Diapositive angebracht. Aufgrund der außerhalb des Magazines angeordneten Federplatte ist das Gerät störanfällig ; ferner müssen die Diapositive in die gerätefesten Magazine eingesetzt bzw. diesen entnommen werden, was umständlich und unhandlich ist.

Weiter ist in der US-PS 3 773 414 ein Diamagazin der eingangs angegebenen Art vorgeschlagen. Dieses Diamagazin ist allerdings für ein spezielles Diavorführgerät ausgebildet, bei dem jedes Diapositiv vor der Projektion eigens betrachtet werden kann. Zu diesem Zweck ist der Diaschieber des Diavorführgerätes gabelförmig gestaltet und die Bildwechseleinrichtung derart ausgebildet, daß bei ihrer Betätigung jeweils zwei hintereinander angeordnete Diapositive zugleich in die Betrachtungs- bzw. Projektionslage gebracht werden. Aus diesem Grunde ist die Ablenkeinrichtung des Diamagazines in zwei in Gehäuselängsrichtung hintereinanderliegende Abschnitte unterteilt, wobei jedes Diapositiv zuerst in die Betrachtungslage, danach aus dieser zwischen die beiden Abschnitte der Ablenkeinrichtung, sodann in die Projektionslage und schließlich vor die Ablenkeinrichtung transportiert wird. Das bekannte Diamagazin ist also für Diavorführgeräte ohne die genannten zwei Vorführlagen (d. h. Betrachtungs- und Projektionslage) ungeeignet.

Ziel der Erfindung ist die Beseitigung der angeführten Nachteile und die Schaffung eines Diamagazines, in das die einer Schachtel od. dgl. entnommenen Diapositive als Stapel bzw. aneinanderliegend eingesetzt werden und trotzdem einzeln vorgeführt werden können, wobei die unterschiedliche Dicke einzelner Diapositive keine Rolle spielt und wobei außerdem das Diamagazin für den überwiegenden Teil derzeit handelsüblicher Vorführgeräte geeignet sein bzw. nicht an einen besonderen Gerätetyp gebunden sein soll oder eine spezielle Ausbildung des Vorführgerätes erfordert.

Dieses Ziel wird mit einem Diamagazin der vorstehend angegebenen Art dadurch erreicht, daß erfindungsgemäß im Bereich der Ablenkeinrichtung ein quer zur Längsmittelebene aus einer Ruhestellung in eine Arbeitsstellung bewegbarer Transporthebel mit einer mit dem Diaschieber der Bildwechseleinrichtung des Vorführgerätes zusammenwirkenden Angriffsfläche vorgesehen ist, die bei in das Vorführgerät eingesetztem Diamagazin und in Ruhestellung des Transporthebels in die Bahn des Diaschiebers ragt bzw. in Arbeitsstellung des Transporthebels in eine Position außerhalb dieser Bahn bewegt wird, um dem Diaschieber das Durchschieben eines Diapositives zu ermöglichen, daß der Transporthebel eine über die Anlenkeinrichtung vorspringende Mitnehmerfläche für das Diapositiv aufweist, und daß die Ablenkeinrichtung an ihren Seiten von zur Durchtrittsöffnung konvergierenden Schrägflächen begrenzt ist und entlang einer durch die Mitte der Durchtrittsöffnung sowie senkrecht zur Längsmittelebene verlaufenden Ebene in zwei übereinander angeordnete Rippen unterteilt ist, von denen jede einen Teil der Ablenkfläche aufweist.

Bei einer Variante der Erfindung wird dieses Ziel dadurch erreicht, daß im Bereich der Ablenkeinrichtung ein quer zur Längsmittelebene aus einer Ruhestellung in eine Arbeitsstellung bewegbarer Transporthebel mit einer mit dem Diaschieber der Bildwechseleinrichtung des Vorführgerätes zusammenwirkenden Angriffsfläche vorgesehen ist, die bei in das Vorführgerät eingesetztem Diamagazin und in Ruhestellung des Transporthebels in die Bahn des Diaschiebers ragt bzw. in Arbeitsstellung des Transporthebels in eine Position außerhalb dieser Bahn bewegt wird, um dem Diaschieber das Durchschieben eines Diapositives zu ermöglichen, daß der Transporthebel eine über die Ablenkeinrichtung vorspringende Mitnehmerfläche für das Diapositiv aufweist, daß die Ablenkeinrichtung von einer vorzugsweise begrenzt schwenkbar im Gehäuse gelagerten Platte gebildet ist, wobei der Transporthebel an der Platte vorgesehen ist, und daß der der Durchtrittsöffnung näher liegende Teil der Ablenkfläche an einer an der Platte federnd angeordneten, insbesondere einteilig angeformten Zunge ausgebildet ist.

Auf diese Weise schafft die Erfindung ein Diamagazin, das frei von Fächern und Verzahnungen ist und im Vorführbetrieb ortsfest im Vorführgerät angeordnet ist. Daher kann das Magazin ohne weiteres zum Einsetzen in jedes beliebige Vorführgerät mit schieberbetätigter Bildwechseleinrichtung ausgebildet werden, weil auf die jeweilige Transportvorrichtung des Gerätes keine Rücksicht genommen werden braucht.

Die Handhabung und Vorführung der Diapositive ist wesentlich vereinfacht, weil die Diapositive als Stapel einer Aufbewahrungskassette entnommen und in das Magazin eingesetzt, aber auch wieder entnommen werden können und das zeitraubende Einsetzen in Fächer entfällt. Außerdem können Diapositive unterschiedlicher Dicke in beliebiger Reihenfolge vorgeführt werden.

Es ist zwar schon eine derartige Vorführung versucht worden, doch hat sich das eigens zu diesem Zweck entwickelte, magazinlose Gerät, bei dem schrägstehende Diapositive von einem Stapel in einen Diakanal eingeführt werden und aus diesem mittels einer gesteuerten Trennwand zu einem zweiten Stapel schrägstehender Diapositive übergeführt werden, in der Praxis nicht bewährt (CH-PS 608 896).

Ein ähnliches Diavorführgerät ist aus der CH-PS 550 421 bekannt, bei dem an der Vorderseite des Diaschiebers ein schwenkbarer Mitnehmer sitzt und zur Überführung eines Diapositives von einem Magazin in das andere eine verdrehbare Führung vorgesehen ist. Auch diese Konstruktion hat sich als nicht zufriedenstellend erwiesen.

In vorteilhafter Weiterbildung der Erfindung ist zur Vorführung unterschiedlich dicker Diapositive vorgesehen, daß in der Durchtrittsöffnung zwei gegenseitig vorgespannte, zumindest parallel zur Längsmittelebene bewegbare Rückhalteorgane angeordnet sind. Dabei ist einfacherweise jedes Rückhalteorgan von einem U-förmig gebogenen Ende eines im Abstand von der Durchtrittsöffnung befestigten Federdrahtes gebildet. Insbesondere ist jeder Federdraht L-förmig gestaltet, wobei der eine, im wesentlichen senkrecht zum Gehäuseboden verlaufende Schenkel das Rückhalteorgan trägt sowie im Abstand von demselben frei drehbar gelagert ist und der andere, über dem Rückhalteorgan angeordnete Schenkel von der Durchtrittsöffnung wegweist. Auf diese Weise können die Rückhalteorgane nicht nur parallel zur Längsmittelebene, sondern auch zur Gehäuseaußenseite oder -innenseite ausweichen, wenn ein Diapositiv durch die Durchtrittsöffnung geschoben wird, wobei einerseits die übrigen (unterschiedlich dicken) Diapositive sicher zurückgehalten werden und anderseits ein Steckenbleiben eines Diapositives in der Durchtrittsöffnung verhindert ist.

Aus Herstellungsgründen ist vorteilhaft, wenn jeder Federdraht an einer mit dem Gehäuse verbundenen Platine angebracht ist.

Bei einer Ausführungsform der Erfindung ist der Transporthebel L-förmig ausgebildet und im Gehäuse um ein vorbestimmtes Ausmaß verschiebbar gelagert, weil dabei die Verschieberichtung des Transporthebels im wesentlichen mit der Transportrichtung des Diapositives übereinstimmt.

Zusätzlich oder alternativ kann der Transporthebel um eine zur Magazin-Längsachse parallele Achse verschwenkbar sein.

Günstig ist auch, wenn der Transporthebel von einer Feder in seine Ruhestellung vorgespannt ist.

Herstellungsmäßige Vereinfachungen bei sicherer Funktion ergeben sich, wenn der eine Schenkel des Transporthebels im Gehäuseboden geführt ist und der andere Schenkel des Transporthebels zwei den Rippen angepaßte Ausnehmungen aufweist.

Zur sicheren Erfassung des jeweils vordersten Diapositives kann die Mitnehmerfläche des Transporthebels im wesentlichen senkrecht zur benachbarten Schrägfläche der Ablenkeinrichtung verlaufen.

Zur gesicherten Rückführung des Diapositives aus dem Vorführgerät in das Magazin kann vorgesehen sein, daß die Durchtrittsöffnung zur Gehäuseaußenseite erweitert ist.

Ferner kann jede Andruckvorrichtung einen zur Ablenkeinrichtung vorgespannten, in Gehäuselängsrichtung verschiebbar gelagerten Block aufweisen, dessen zur Ablenkeinrichtung weisende Fläche parallel zur zugeordneten Schrägfläche der Ablenkeinrichtung verläuft, weil auf diese Weise alle Diapositive eines Stapels flächig aneinanderliegen.

In vorteilhafter Weiterbildung der Variante der Erfindung kann zur Vereinfachung der Montage des Dia-Magazins die Platte zur schwenkbaren Lagerung Steckzapfen aufweisen, die in entsprechende Ausnehmungen des Gehäuses mit Spiel eingreifen.

Zum störungsfreien Diawechsel kann die Platte zur Durchtrittsöffnung hin verjüngt sein. Diesem Zweck dient auch die Maßnahme, an der Platte eine Führung für den Diaschieber vorzusehen. Dabei kann die Führung an ihrem der Durchtrittsöffnung abgekehrten Ende erweitert sein. Vorteilhaft ist hiezu weiters, wenn der an der Platte schwenkbar angebrachte Transporthebel an seinem freien Ende in einem Führungsschlitz der Platte geführt ist. Außerdem kann vorgesehen sein, daß der Transporthebel im Bereich der Mitnehmerfläche keilförmig gestaltet ist.

Zur Schonung der Diapositivrähmchen kann die Platte an ihrer der Zufuhrseite der Diapositive entsprechenden Seite einen Anschlag für das jeweils vorderste Diapositiv aufweisen, an den eine Schrägfläche anschließt.

Ferner kann die Mitnehmerfläche konvex in Richtung zur Durchtrittsöffnung gekrümmt sein.

Günstig ist auch, wenn die Durchtrittsöffnung zur Gehäuseinnenseite erweitert ist.

Zur genauen Rückführung des ersten vorgeführten Diapositives kann die der Abfuhrseite der Ablenkeinrichtung zugeordnete Andruckeinrichtung mit einer schrägen Führungsrippe od. dgl. versehen sein.

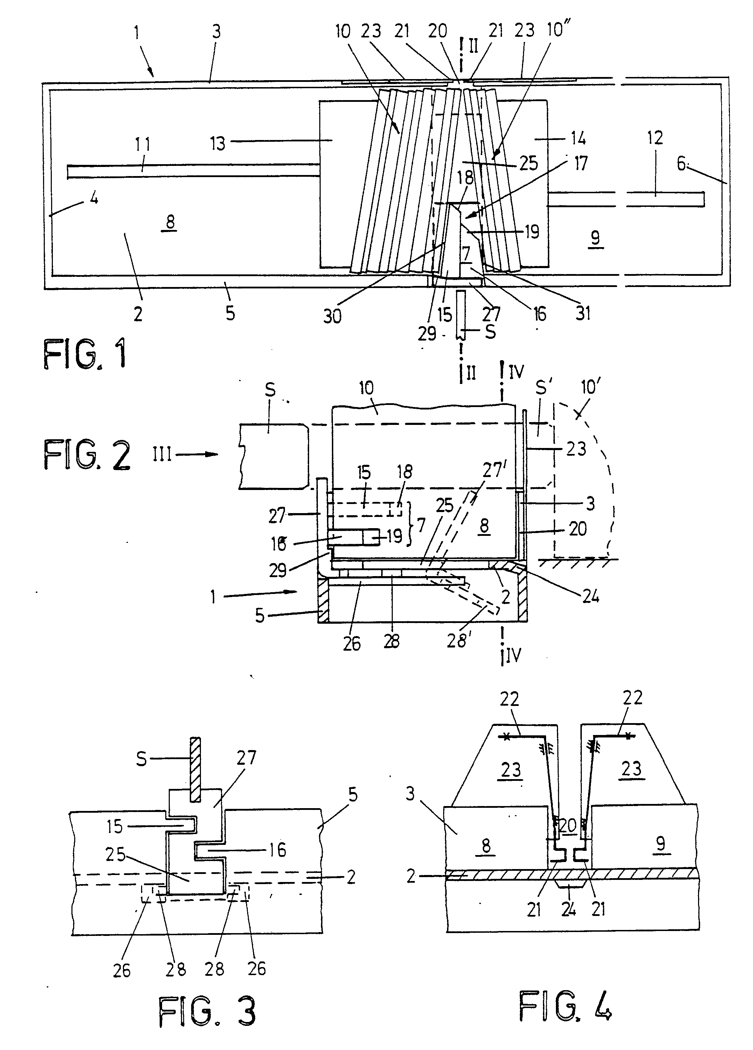

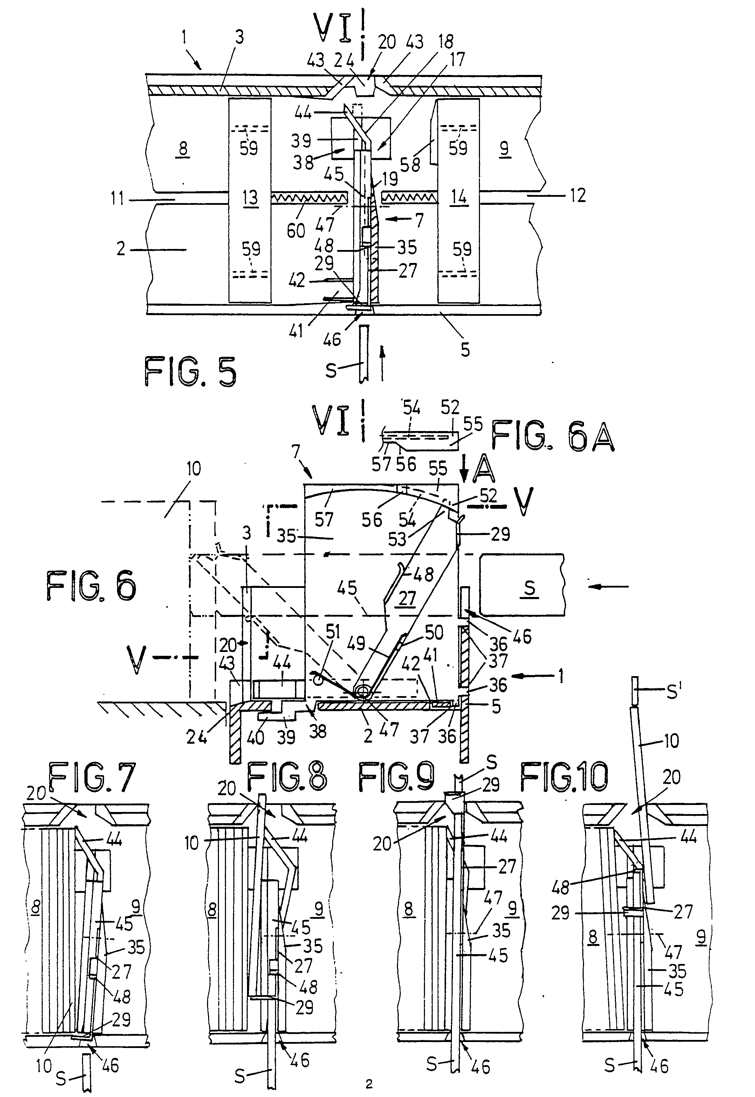

Nachstehend wird die Erfindung anhand bevorzugter Ausführungsbeispiele näher erläutert, die in den Zeichnungen schematisch dargestellt sind ; es zeigen Fig. 1 ein erstes Ausführungsbeispiel des Diamagazins in Draufsicht, Fig. 2 einen Querschnitt durch das Magazin nach der Linie II-II in Fig. 1, Fig. 3 eine Ansicht in Richtung des Pfeiles III in Fig. 2, Fig. 4 einen Schnitt nach der Linie IV-IV in Fig. 2, Fig. 5 ein zweites Ausführungsbeispiel des Diamagazins in teilweiser Draufsicht und im Schnitt nach der Linie V-V in Fig. 6, Fig. 6 einen Querschnitt durch das Magazin nach der Linie VI-VI in Fig. 5, Fig. 6A eine Draufsicht auf ein Detail der Ablenkeinrichtung, in Richtung des Pfeiles A in Fig. 6, Fig. 7 eine vereinfachte Draufsicht auf das Magazin mit eingesetzten Diapositiven und ausgezogenem Diaschieber, Fig. 8 eine vereinfachte Draufsicht auf das Magazin während der Anfangsphase des Einschiebens eines Diapositives in den (nicht gezeigten) Diakanal, Fig. 9 eine vereinfachte Draufsicht auf das Magazin bei weiter in den (nicht gezeigten) Diakanal eingeschobenem Diapositiv und Fig. 10 eine vereinfachte Draufsicht auf das Magazin während der Rückführung des Diapositives in das Magazin.

Das erfindungsgemäße Diamagazin weist ein schachtelförmiges Gehäuse 1 mit einem rechteckigen Boden 2 und vier gleich hohen Seitenwänden 3, 4, 5, 6 auf, das hinsichtlich seiner Querschnittsabmessungen und -form der Rähmchengröße und dem Magazinschacht, den Magazinführungen und der Magazin-Transporteinrichtung der üblichen Diavorführgeräte (Betrachter und Projektoren) entsprechend ausgebildet ist, sodaß es bei den meisten Vorführgeräten verwendbar ist.

Das Gehäuse 1 ist mit (nicht gezeigten) justierbaren Anschlägen ausgestattet, die mit Bauteilen des Vorführgerätes zusammenwirken, um die zur Funktion notwendige Relativlage zu erzielen und einzuhalten. Während der Vorführung ist das Magazin im Vorführgerät ortsfest angeordnet ; es weist daher weder eine Gleitfläche noch eine Verzahnung zum Eingriff einer Transporteinrichtung auf.

Das Gehäuse 1 besitzt einen im wesentlichen durchgehenden ebenen Boden 2 und ist von einer etwa in seiner Längsmitte vorgesehenen Ablenkeinrichtung 7 in zwei Abteile 8 und 9 unterteilt, von denen das in Fig. 1 linke Abteil 8 zur Aufnahme der vorzuführenden Diapositive 10 dient.

Im Boden 2 ist in jedem Abteil 8, 9 ein längsverlaufender Schlitz 11 bzw. 12 ausgebildet, durch den ein an einem Block 13 bzw. 14 an dessen Unterseite vorgesehener Fuß greift, an dem eine (nicht gezeigte) Zugfeder od. dgl. angreift, mit der die Blöcke 13, 14 jeweils zur Längsmitte des Gehäuses 1 gespannt sind. Auf diese Weise ist jeweils eine Andruckvorrichtung geschaffen, die an den Diapositiven 10 angreift und diese als Stapel hält.

Die Ablenkeinrichtung 7 wird von zwei im Abstand übereinander angeordneten Rippen 15, 16 gebildet, die von einer längsverlaufenden Seitenwand 5 ins Gehäuse 1 ragen und mit ihren freien Enden eine Ablenkfläche 17 bilden ; beim dargestellten Ausführungsbeispiel besteht die Ablenkfläche 17 aus zwei Teilen 18, 19, die quer zur Gehäuselängsrichtung gegeneinander versetzt sind.

Im Bereich der Ablenkeinrichtung 7 ist diese sowie die benachbarte Seitenwand 5 niedriger als der Unterkante des Dia-Schiebers S des Vorführgerätes entspricht (s. Fig. 2).

In der der Ablenkeinrichtung 7 gegenüberliegenden Seitenwand 3 ist eine schlitzförmige Durchtrittsöffnung 20 ausgebildet, wobei die durch die Mitte derselben verlaufende und auf die Längsmittelebene des Gehäuses 1 senkrecht stehende Ebene die Ablenkfläche 17 schneidet. Die Ablenkfläche 17 steht im wesentlichen auf den Gehäuseboden 2 senkrecht und liegt in einer Ebene, die von einer Stelle der der Durchtrittsöffnung 20 zugeordneten Seitenwand 3 im zufuhrseitigen (linken) Abteil 8 zu einer Stelle der gegenüberliegenden Seitenwand 5 im abfuhrseitigen (rechten) Abteil 9.

In der Durchtrittsöffnung 20 sind gemäß Fig. 4 federnde Rückhalteorgane 21 angeordnet, die von den U-förmig gebogenen Enden je eines L-förmigen Federdrahtes 22 gebildet sind und dazu dienen, bei der Vorführung unterschiedlich dicker Diapositive jeweils eines derselben durch die Durchtrittsöffnung durchzulassen, das jeweils folgende Diapositiv jedoch zuverlässig im Abteil 8 zurückzuhalten.

Die Federdrähte 22 besitzen zwei Schenkel, von denen der eine im wesentlichen senkrecht zum Gehäuseboden 2 verläuft und das Rückhalteorgan 21 trägt und der andere Schenkel an der Oberseite parallel zur Seitenwand 3 angeordnet ist. Jeder Federdraht 22 ist an einer mit der Seitenwand 3 verbundenen Platine 23 angebracht, wobei der obenliegende Schenkel an seinem freien Ende an der Platine 23 befestigt ist und der andere Schenkel im oberen Bereich drehbar gehalten sowie weiters im Bereich des Rückhalteorganes 21 drehbar und außerdem parallel zur Seitenwand 3 verschiebbar gelagert ist, gegebenenfalls in seiner Bewegung zum gegenüberliegenden Federdraht 22 durch einen Anschlag begrenzt ist. Der gegenseitige Abstand der Rückhalteorgane 21 ist höchstens so groß wie die Dicke der dünnsten üblichen Diapositive bzw. deren Rähmchen, wogegen der gegenseitige Abstand der anschließenden Schenkel der Federdrähte 22 größer ist als die Dicke der dicksten üblichen Diapositive bzw. Rähmchen. Somit können die dünnsten Diapositive zwischen den Rückhalteorganen 21 hindurchtreten, alle übrigen aber greifen an einem oder beiden Rückhalteorganen 21 an und bewirken ein elastisches Ausweichen derselben, wobei anfänglich die Rückhalteorgane 21 um die Achse des anschließenden Federdrahtschenkels verschwenken und danach dieser Schenkel elastisch von der Durchtrittsöffnung 20 weggebogen wird. Im Bereich der Durchtrittsöffnung 20 ist das Gehäuse 1 mit einer trichterförmigen Erweiterung 24 versehen, die sich nach außen erweitert.

Im Gehäuseboden 2 ist eine von der Ablenkeinrichtung 7 zur Durchtrittsöffnung 20 verlaufende Aussparung 25 mit Führungen 26 vorgesehen, in der ein Transporthebel 27 verschieblich gelagert ist. Der Transporthebel 27 ist L-förmig gestaltet (s. Fig. 2), wobei sein zum Gehäuseboden 2 paralleler Schenkel am freien Ende zwei seitlich abstehende und in die Führungen 26 eingreifende Fortsätze 28 trägt. Der andere, aufrechte Schenkel ist mit zwei den Rippen 15, 16 entsprechenden Ausnehmungen versehen und überragt die benachbarte Seitenwand 5 um einen vorbestimmten Betrag. Der Transporthebel 27 ist von einer (nicht gezeigten) Feder in seiner in Fig. 2 mit vollen Linien dargestellten Ruhestellung gehalten und derart im Gehäuseboden 2 gelagert, daß er um ein vorbestimmtes Ausmaß zur Durchtrittsöffnung 20 geschoben werden kann, in welcher Lage die Fortsätze 28 aus den Führungen 26 austreten und der Transporthebel 27 um die Verbindungsstelle der beiden Schenkel verschwenkbar ist. Der in diese Arbeitsstellung verschwenkte Transporthebel 27' ist in Fig. 2 mit strichlierten Linien dargestellt.

Die Höhe des aufrechten Schenkels des Transporthebels 27 ist derart bemessen, daß bei im Vorführgerät angeordnetem Magazin der in Ruhestellung befindliche Schenkel in die Bahn des Diaschiebers S ragt, in Arbeitsstellung jedoch außerhalb bzw. unterhalb der Bahn des Diaschiebers S liegt, wie ebenfalls mit strichlierten Linien angedeutet ist. Dabei hält die Feder den Schenkel in Anlage an der Unterseite des eingeschobenen Diaschiebers S'.

An der zum zufuhrseitigen Abteil 8 weisenden Seite der Ablenkeinrichtung 7 ragt eine am Transporthebel 27 vorgesehene Mitnehmerfläche 29 in dieses Abteil 8, fluchtet jedoch annähernd mit der benachbarten Seitenwand 5 (Fig. 1).

Da die Ablenkeinrichtung 7 einen gewissen Platz beansprucht, der größer als die Breite der Durchtrittsöffnung 20 ist, stehen die Diapositive 10 in den Abteilen 8 und 9 schräg zur Gehäuselängsrichtung. Daher sind die zu den Abteilen 8, 9 weisenden Seiten der Ablenkeinrichtung 7 bzw. der Rippen 15, 16 von einer Schrägfläche 30 bzw. 31 begrenzt, wobei die Schrägflächen 30, 31 zur Durchtrittsöffnung 20 konvergieren. Weiters sind die zur Ablenkeinrichtung 7 weisenden Andruckflächen der Blöcke 13, 14 parallel zu diesen Schrägflächen 30, 31 ausgebildet.

Die Vorführung von Diapositiven mit Hilfe des erfindungsgemäßen Diamagazins erfolgt in der nachstehend beschriebenen Weise.

Ein Stapel vorzuführender Diapositive 10, die wahllos verschiedene Dicke aufweisen können, wird in das zufuhrseitige (linke) Abteil 8 eingesetzt, nachdem der Block 13 gegen die Kraft der Andruckfeder im Schlitz 11 (gemäß Fig. 1 nach links) verschoben worden ist. Nach Freigeben des Blockes 13 wird dieser von der Andruckfeder an den Stapel und folglich werden die Diapositive 10 nebeneinanderstehend an die Rippe 15 der Ablenkeinrichtung 7 angedrückt. Hierauf wird der Diaschieber S des Vorführgerätes herausgezogen und das Diamagazin derart in das Vorführgerät eingesetzt, daß die Durchtrittsöffnung 20 des Magazines dem Diakanal des Vorführgerätes gegenüberliegt. Dies wird durch die erwähnten, jedoch in den Zeichnungen nicht gezeigten Anschläge erleichtert und gesichert.

Wird nun der Diaschieber S betätigt bzw. eingeschoben, so schlägt er am oberen Rand des Transporthebels 27 an (s. Fig. 2) und verschiebt diesen gegen die Kraft der Rückholfeder in das Gehäuse 1, wobei der Transporthebel 27 einerseits im Gehäuseboden 2 und anderseits von den Rippen 15, 16 der Ablenkeinrichtung 7 geführt ist. Bei dieser Einschubbewegung ergreift der Transporthebel 27 mit seiner Mitnehmerfläche 29 das vorderste, d. h. an der Ablenkeinrichtung 7 anliegende Diapositiv 10 und schiebt es zur Durchtrittsöffnung 20. Ist das Diapositiv 10 mit dem dünnsten handelsüblichen Rähmchen (1 mm Dicke) versehen, so tritt es ohne weiteres durch die Durchtrittsöffnung 20, wobei allfällig durch Reibung mitgenommene benachbarte Diapositive 10 vom (in den Zeichnungen linken) Rückhalteorgan 21 am Durchtritt gehindert werden. Ist das Rähmchen des Diapositives 10 jedoch dicker, so stößt es an einem oder beiden Rückhalteorganen 21 (Fig. 3) an, die dadurch nach außen verschwenkt und somit die anschließenden Schenkel der Federdrähte 22 auf Torsion beansprucht werden; sobald das Diapositiv 10 zwischen den Rückhalteorganen 21 durchgetreten ist, können sich die Schenkel der Federdrähte 22 entspannen und die Rückhalteorgane 21 auf dem Diapositiv 10 in ihre Ausgangslage zurückgleiten, wobei sich die Federdrähte 22 auseinanderbiegen.

Bei fortgesetztem Einschieben des Diaschiebers S gelangt das Diapositiv 10 in den Diakanal des Vorführgerätes, wodurch es in die Ebene des Diakanales geschwenkt wird, sodaß es nunmehr praktisch senkrecht zur Längsmittelebene des Gehäuses 1 steht. Bei diesem Schwenken gleitet das hintere Ende des Diapositives 10 von der Mitnehmerfläche 29 in die Mitte des Transporthebels 27 und steht somit in einer Flucht mit dem Diaschieber S.

Das weitere Einschieben bewirkt, daß die Fortsätze 28 des Transporthebels 27 aus den Führungen 26 treten, wobei der Transporthebel 27 durch einen (nicht gezeigten) Anschlag gegen weiteres Einwärtsschieben gesperrt wird ; daher schwenkt der Transporthebel 27 um die Verbindungsstelle seiner Schenkel, bis die Oberkante des Transporthebels 27 unter dem Niveau des unteren Randes des Diaschiebers S liegt und der Diaschieber S über den verschwenkten Transporthebel 27′ hinweggleiten kann.

Da das Diapositiv 10 mit dem Diaschieber S zum Fluchten gebracht worden ist, greift jetzt der Diaschieber S am Diapositiv 10 an und schiebt es weiter in den Diakanal (10′ und S′ in Fig. 2), wogegen der Transporthebel 27′ in seiner verschwenkten Stellung verbleibt.

Nach der Vorführung des Diapositives 10′ wird der Diaschieber S herausgezogen. Dabei erfaßt eine an der Innenseite des Diaschiebers S angebrachte, an sich bekannte Mitnehmerfahne das Diapositiv 10′ und schiebt es aus dem Diakanal. Sobald der Diaschieber S den verschwenkten Transporthebel 27′ freigibt, schwenkt dieser unter der Wirkung seiner Rückholfeder und allenfalls unter Mitwirkung des zurückgeschobenen Diapositives 10 in die aufrechte Stellung und kehrt, nachdem die Fortsätze 28 wieder in die Führungen 26 eingreifen, in seine Ausgangsstellung zurück.

Das Diapositiv 10 jedoch wird gegen die Ablenkfläche 17 geführt und an dieser in Richtung zum zweiten (rechten) Abteil 9 abgelenkt. Am Ende der Ausschubbewegung des Diaschiebers S gelangt das Diapositiv 10 in Anlage an dem Block 14 dieses Abteils 9, der gegen die Kraft seiner Feder (nach rechts) ausweicht, sodaß das Diapositiv in seine mit 10″ bezeichnete Endlage gelangt.

Wird der Diaschieber S wieder eingeschoben, so wiederholen sich die Vorgänge mit dem nachfolgenden Diapositiv, bis schließlich sämtliche Diapositive 10 aus dem einen (linken) Abteil 8 in das andere (rechte) Abteil 9 übergeführt worden sind.

Sodann kann bei herausgeschobenem Diaschieber S das Magazin dem Vorführgerät entnommen werden. Die im Abteil 9 befindlichen Diapositive 10″ können sofort als Stapel entnommen und in ihre Aufbewahrungskassette od. dgl. gegeben werden.

Im Rahmen der Erfindung sind zahlreiche Abwandlungen möglich. So kann z. B. der Transporthebel um eine körperliche Achse verschwenkbar sein, die auch über dem oberen Rand des Diaschiebers liegen kann. Alternativ könnte der Transporthebel auf einer zum Gehäuseboden schrägen Bahn geführt sein. Desgleichen können die Rückhalteorgane in anderer Weise ausgebildet sein und beispielsweise zwei gegenseitig vorgespannte, in der Seitenwand eingesetzte Blättchen sein, die vom jeweiligen Diapositiv auseinandergedrängt werden.

Eine andere Ausführungsform der Erfindung ist in Fig. 5, 6 und 6A dargestellt. Auch bei dieser weist das Diamagazin ein schachtelförmiges Gehäuse 1 mit einem rechteckigen Boden 2 und vier gleich hohen Seitenwänden auf, von denen bloß die längeren Seitenwände 3 und 5 gezeigt sind.

Das Gehäuse 1 ist wieder von der etwa in der Längsmitte angeordneten Ablenkeinrichtung 7 in zwei Abteile 8 und 9 unterteilt, wobei die Diapositive aus dem in Fig. 5 linken Abteil 8 nach der Vorführung in das in Fig. 5 rechte Abteil 9 übergeführt werden, wie noch erläutert wird.

Im Boden 2 ist in jedem Abteil 8, 9 ein längsverlaufender Schlitz 11 bzw. 12 zur Führung je eines Blockes 13 bzw. 14 der jeweiligen Andruckeinrichtung ausgebildet.

Die Ablenkeinrichtung 7 ist von einer Platte 35 gebildet, die quer zur Längsachse des Gehäuses 1 im Bereich einer Durchtrittsöffnung 20 angeordnet und in begrenztem Ausmaß schwenkbar gelagert ist. Zu diesem Zweck ist die Platte 35 an ihrer der Durchtrittsöffnung 20 abgekehrten Seite mit zwei Steckzapfen 36 und an der zugeordneten unteren Ecke mit einem weiteren Steckzapfen 36 versehen, welche in entsprechende Ausnehmungen 37 in der Seitenwand 5 bzw. im Boden 2 mit Spiel eingreifen. Im Bereich der Durchtrittsöffnung 20 ist im Boden 2 des Gehäuses 1 ein Fenster 38 vorgesehen, in das ein Fuß 39 der Platte 35 eingreift, der einen den Boden 2 untergreifenden Fortsatz 40 aufweist. Im Bereich der Steckzapfen 36 ist der Boden 2 mit einer federnden Zunge 41 versehen. Das Gehäuse 1 besteht vorteilhafterweise aus Kunststoff, und die Zunge 41 ist durch Ausbildung eines U-förmigen Schlitzes 42 im Boden 2 gebildet, wobei ihre Dicke passend gewählt ist.

Das Einsetzen der Platte 35 in das Gehäuse 1 erfolgt einfach durch Einführen des Fortsatzes 40 und danach des Fußes 39 in das Fenster 38, Abwärtsdrücken der Platte 35 unter elastischer Verformung der Zunge 41 durch den unteren Steckzapfen 36 und Einschieben der seitlichen Steckzapfen 36 in die Ausnehmungen 37 der Seitenwand 5, worauf die Zunge 41 in ihre Ausgangslage zurückfedert und die Platte 35 montiert ist. Auf Grund des Spieles der Steckzapfen 36 in den Ausnehmungen 37 ist die Platte 35 verschwenkbar, wobei die Verschwenkung durch Anschlag des Fußes 39 an den Rändern des Fensters 38 begrenzt ist.

Die der Ablenkeinrichtung 7 bzw. der Platte 35 gegenüberliegende Durchtrittsöffnung 20 ist nach außen verjüngt und weist im Bereich des Bodens 2 zwei kurze schräge Stufen 43 zur Führung des Diapositives auf. Der Boden 2 selbst ist im Bereich der Durchtrittsöffnung 20 mit einer nach unten führenden Erweiterung 24 versehen, um die Rückführung des Diapositives zu erleichtern.

Gegenüber der Durchtrittsöffnung 20 ist die Platte 35 mit einer federnden Zunge 44 versehen, die insbesondere einteilig mit der aus entsprechendem Kunststoff bestehenden Platte 35 ausgebildet ist. An dieser Zunge 44 ist ein Teil 18 einer schräg zur Platte 35 verlaufenden Ablenkfläche 17 ausgebildet ; ein zweiter Teil 19 der Ablenkfläche 17 ist an der Platte 35 selbst etwa in ihrer Mitte vorgesehen.

In Höhe des Diaschiebers S des Vorführgerätes ist in der Platte 35 eine Führung 45 für den Diaschieber S ausgebildet, die einfacherweise aus einem oben offenen Kanal besteht und an der Eintrittsseite des Diaschiebers S (rechts in Fig. 6) erweitert ist. Die benachbarte Seitenwand 5 besitzt an dieser Stelle einen Schlitz 46, da das Gehäuse 1 über die Unterkante des Diaschiebers S hinaufreicht.

An der Unterseite der Platte 35 ist etwa in deren Mitte um eine zur Gehäuselängsrichtung parallele Achse 47 ein Transporthebel 27 schwenkbar gelagert, der eine in Ruhelage des Transporthebels 27 in die Bahn des Diaschiebers S ragende bzw. in der Führung 45 angeordnete Angriffsfläche 48 und eine über der Bahn des Diaschiebers S vorgesehene Mitnehmerfläche 29 für das Diapositiv aufweist. Der Transporthebel 27 ist vorzugsweise ein Blechteil mit abgebogenen Lappen, an denen die Angriffsfläche 48 bzw. die Mitnehmerfläche 29 ausgebildet sind. Diese beiden Flächen 48 und 29 sind zum Diaschieber S bzw. zum Diapositiv konvex gekrümmt. Außerdem schließt die Mitnehmerfläche 29 mit der Ebene des Transporthebels 27 einen Winkel von weniger als 90° ein, um das Diapositiv sicher zu ergreifen. Der Transporthebel 27 ist in seine Ruhestellung mit Hilfe einer um die Achse 47 gewundenen Feder 49 vorgespannt, die sich einerseits an einem Lappen 50 des Transporthebels 27 und andererseits an einem Widerlager 51 an der Platte 35 abstützt ; die Ruhelage des Transporthebels 27 ist von einem Anschlag 52 an der Platte 35 bestimmt. Am freien Ende weist der Transporthebel 27 eine Nase 53 auf, die einen Führungsschlitz 54 in der Platte 35 eingreift.

Im Bereich des Anschlages 52 ist an der Platte 35 ein Anschlag 55 für das jeweils vorderste Diapositiv im Abteil 8 ausgebildet, der so breit wie die Platte 35 an ihrer Unterseite ist, um das Diapositiv senkrecht zum Boden 2 zu halten. Dieser Anschlag 55 geht über eine Schrägfläche 56 in einen abgesetzten Bereich 57 über (Fig. 6A).

In Fig. 6 ist der Diaschieber S mit vollen Linien in seiner Ausgangslage dargestellt, aus der er in Richtung des Pfeiles vorgeschoben wird, bis seine Stirnfläche an der Angriffsfläche 48 des Transporthebels 27 anschlägt und diesen mitnimmt. Dabei erfaßt die Mitnehmerfläche 29 das Diapositiv 10 und schiebt es aus dem Gehäuse 1. Mit strichlierten Linien ist angedeutet, daß zu einem gewissen Zeitpunkt der Diaschieber S die Angriffsfläche 48 des Transporthebels 27 überfährt und selbst das Diapositiv 10 weiter vorschiebt ; die Endlagen des Diaschiebers S sowie des Diapositives 10 sind mit strichpunktierten Linien angedeutet.

Am Block 14 im Abteil 9 ist an der der Platte 35 zugekehrten Seite eine schräge Führungsrippe 58 für die rückgeführten Diapositive vorgesehen. Ferner weisen beide Blöcke 13 und 14 der Andruckeinrichtungen an ihrer Unterseite zwei Gleitkufen 59 auf, um eine reibungsarme Verschiebung der Blöcke 13, 14 zu ermöglichen. Die beiden Blöcke 13, 14 sind mittels einer gemeinsamen Feder 60 zur Platte 35 hin gehalten.

Nachstehend wird anhand der Fig. 7 bis 10 die Funktionsweise des Diamagazins erläutert ; diese Figuren sind in vereinfachter Weise dargestellt und bloß mit den wesentlichen Bezugszeichen versehen.

Nachdem der Block 13 entgegen der Kraft der Feder 60 von der Ablenkeinrichtung 7 weggezogen worden ist, werden die vorzuführenden Diapositive, von denen das vorderste bzw. erste mit dem Bezugszeichen 10 bezeichnet ist, als Stapel, ungeachtet ihrer unterschiedlichen Dicke hintereinanderliegend, in das zufuhrseitige Abteil 8 eingesetzt. Danach wird das Diamagazin in das Vorführgerät, dessen Diaschieber S aus dem Gerät herausgezogen ist, mit Hilfe nicht gezeigter Anschläge derart eingesetzt, daß die Durchtrittsöffnung 20 gegenüber dem Diakanal des Gerätes zu liegen kommt.

Dieser Zustand ist in Fig. 7 gezeigt. Der Block 13 der Andruckeinrichtung drückt den Diastapel und somit das vorderste Diapositiv 10 an die Platte 35 der Ablenkeinrichtung 7, wobei das Diapositiv 10 oben am Anschlag 55 und im Bereich der Durchtrittsöffnung 20 an der elastischen Zunge 44 anliegt. Da die Platte 35 schwenkbar am Gehäuse 1 angelenkt ist, stellt sie sich leicht schräg zur Querrichtung des Gehäuses 1 ein, wie aus Fig. 7 ersichtlich. Dabei hintergreift die Mitnehmerfläche 29 des Transporthebels 27 den dem Diaschieber S benachbarten hinteren Rand.

Wird nun der Diaschieber S eingeschoben, so tritt sein vorderes Ende durch den Schlitz 46 in der Seitenwand 5 in die Führung 45 der Platte 35 ein und gelangt in Anschlag an der Angriffsfläche 48 des Transporthebels. Das weitere Einschieben des Diaschiebers S bewirkt die Mitnahme bzw. Verschwenkung des Transporthebels 27 um seine Achse 47 und entgegen der Kraft der Feder 49. Dabei erfaßt die Mitnehmerfläche 29 des Transporthebels 27 das Diapositiv 10 am hinteren Rand und schiebt es in Richtung zur Durchtrittsöffnung 20. Das Diapositiv 10 wird am vorderen Rand von der schrägen Stufe 43 nach vorne gedrückt, wobei die federnde Zunge 44 entsprechend ausweicht (Fig. 8). Etwa zugleich gleitet der hintere Rand des Diapositives 10 vom Anschlag 55 über die Schrägfläche 56 auf den Bereich 57 und weiters wird die Platte 35 durch den in der Führung 45 vorgeschobenen Diaschieber S geradegestellt. Auf diese Weise hat das Diapositiv 10 eine kurze Bewegung in Längsrichtung des Gehäuses 1 durchgeführt und steht nun fluchtend vor dem Diakanal des Vorführgerätes.

Die folgenden Diapositive im Abteil 8 werden vom Block 13 gegen die Platte 35 gedrückt und unterstützen diesen Vorgang.

Der Diaschieber S wird weiter vorgeschoben, bis er die in Fig. 2 mit strichlierten Linien eingezeichnete Stellung einnimmt. In dieser gelangt die Angriffsfläche 48 des Transporthebels 27 aus der Bahn des Diaschiebers S. Ist bis jetzt der Transport des Diapositives 10 durch Vermittlung des Transporthebels 27 und dessen Mitnehmerfläche 29 erfolgt, so übernimmt ab nun der Diaschieber S direkt den weiteren Vorschub des Diapositives 10 etwa in die mit strichpunktierten Linien dargestellte Lage, wobei er über die Angriffsfläche 48 hinweggleitet (s. Fig. 6 und 9).

Sobald das Diapositiv 10 mit seinem hinteren Rand in den Bereich der Durchtrittsöffnung 20 gelangt, kehrt die Zunge 44 in ihre Ausgangslage zurück oder zumindest soweit, bis sie an dem Stapel Diapositive anliegt (Fig. 9).

Nach der Vorführung wird der Diaschieber S herausgezogen, wobei sein vorderer Finger S' das Diapositiv 10 am vorderen Rand erfaßt und aus dem Diakanal heraus sowie durch die Durchtrittsöffnung 20 in das Gehäuse 1 schiebt. Dabei trifft der hintere Rand des Diapositives 10 auf den an der Zunge 44 ausgebildeten Teil 18 der Ablenkfläche 17, der das Diapositiv 10 in das Abteil 9 ablenkt. Bei fortgesetztem Ausziehen des Diaschiebers S wird das Diapositiv 10 zwischen die Ablenkeinrichtung 7 und den Block 14 geschoben, wobei es entlang des zweiten Teiles 19 der Ablenkfläche 17 und der Führungsrippe 58 gleitet, bis der Diaschieber S zur Gänze herausgezogen ist und sich das Diapositiv 10 im Abteil 9 befindet.

Während dieses Vorganges kehrt der Transporthebel 27, sobald das vordere Ende des Diaschiebers S über die Angriffsfläche 48 darüberbewegt worden ist, unter Wirkung der Feder 49 in seine Ausgangslage zurück. Wie aus Fig. 9 hervorgeht, ist derjenige Lappen des Transporthebels 27, an dem die Mitnehmerfläche 29 ausgebildet ist, an der dem Diastapel zugekehrten Seite keilförmig gestaltet ; auf diese Weise kann dieser Lappen ohne weiteres zwischen den Diastapel und die Platte 35 eintreten, wobei die Diapositive gegen die Wirkung der Andruckeinrichtung von der Ablenkeinrichtung 7 abgehoben und danach — sobald der Transporthebel 27 in Ruhelage und die Mitnehmerfläche 29 über der Seitenwand 5 des Gehäuses 1 ist — wieder an die Ablenkeinrichtung 7 angedrückt werden. Außerdem stellt die Zunge 44 die Platte 35 wieder leicht schräg, wobei allerdings mit fortschreitend zunehmender Anzahl Diapositive im abfuhrseitigen Abteil 9 ein Gegendruck auf die Platte 35 ausgeübt wird.

Die Zunge 44 braucht nicht notwendigerweise einstückig mit der Platte 35 ausgebildet sein ; sie kann beispielsweise aus Federblech bestehen und an der Platte befestigt, z. B. eingeklemmt oder angenietet sein. Desgleichen kann die Schwenklagerung der Platte 35 in anderer, dem Fachmann geläufiger Weise erfolgen.

Wesentlich ist, daß der Transport des Diapositives anfänglich mit Hilfe des vom Diaschieber S bewegten Transporthebels 27 und danach durch den Diaschieber S selbst erfolgt.

Die in Fig. 7 bis 10 dargestellten Lagen der einzelnen Bauteile und der Diapositive sind schematisch zu verstehen. Die tatsächlichen Lagen ergeben sich aus der Verschwenkbarkeit der Platte 35 und der Federkräfte der Zunge 44 und der Federn 49 und 60 sowie der auf die Diapositive wirkenden Kräfte des Transporthebels 27 sowie Reibungskräfte.

**Patentansprüche**

1. Diamagazin mit einem im wesentlichen schachtelförmigen, oben offenen Gehäuse (1), für ein Diavorführgerät mit einer einen horizontal betätigten Diaschieber (S) aufweisenden Bildwechseleinrichtung, mit einer etwa in Längsmitte einer Längswand (3) des Gehäuses (1) ausgebildeten und der Dicke eines Diapositives (10) angepaßten Durchtrittsöffnung (20), mit einer Ablenkeinrichtung (7), welche eine schräg zur Längsmittelebene des Gehäuses (1) verlaufende Ablenkfläche (17) aufweist und der Durchtrittsöffnung (20) gegenüberliegt, und mit einer zu beiden Seiten der Ablenkeinrichtung (7) angeordneten Andruckeinrichtung für Diapositive, dadurch gekennzeichnet, daß im Bereich der Ablenkeinrichtung (7) ein quer zur Längsmittelebene aus einer Ruhestellung in eine Arbeitsstellung bewegbarer Transporthebel (27) mit einer mit dem Diaschieber (S) der Bildwechseleinrichtung des Vorführgerätes zusammenwirkenden Angriffsfläche vorgesehen ist, die bei in das Vorführgerät eingesetztem Diamagazin und in Ruhestellung des Transporthebels (27) in die Bahn des Diaschiebers (S) ragt bzw. in Arbeitsstellung des Transporthebels (27) in eine Position außerhalb dieser Bahn bewegt wird, um dem Diaschieber (S) das Durchschieben eines Diapositives (10) zu ermöglichen, daß der Transporthebel (27) eine über die Ablenkeinrichtung (7) vorspringende Mitnehmerfläche (29) für das Diapositiv (10) aufweist, und daß die Ablenkeinrichtung (7) an ihren Seiten von zur Durchtrittsöffnung (20) konvergierenden Schrägflächen (30, 31) begrenzt ist und entlang einer durch die Mitte der Durchtrittsöffnung (20) sowie senkrecht zur Längsmittelebene verlaufenden Ebene in zwei übereinander angeordnete Rippen (15, 16) unterteilt ist, von denen jede einen Teil (18, 19) der Ablenkfläche (17) aufweist (Fig. 1 bis 4).

2. Diamagazin nach Anspruch 1, dadurch gekennzeichnet, daß in der Durchtrittsöffnung (20) zwei gegenseitig vorgespannte, zumindest parallel zur Längsmittelebene bewegbare Rückhalteorgane (21) angeordnet sind (Fig. 1, 4).

3. Diamagazin nach Anspruch 2, dadurch gekennzeichnet, daß jedes Rückhalteorgan (21) von einem U-förmig gebogenen Ende eines im Abstand von der Durchtrittsöffnung (20) befestigten Federdrahtes (22) gebildet ist (Fig. 4).

4. Diamagazin nach Anspruch 3, dadurch gekennzeichnet, daß jeder Federdraht (22) L-förmig gestaltet ist, wobei der eine, im wesentlichen senkrecht zum Gehäuseboden verlaufende Schenkel das Rückhalteorgan (21) trägt sowie im Abstand von demselben frei drehbar gelagert ist und der andere, über dem Rückhalteorgan (21) angeordnete Schenkel von der Durchtrittsöffnung (20) wegweist (Fig. 4).

5. Diamagazin nach Anspruch 3 oder 4, dadurch gekennzeichnet, daß jeder Federdraht (22) an einer mit dem Gehäuse (1) verbundenen Platine (23) angebracht ist (Fig. 4).

6. Diamagazin nach den Ansprüchen 1 bis 5, dadurch gekennzeichnet, daß der Transporthebel (27) L-förmig ausgebildet und im Gehäuse (1) um ein vorbestimmtes Ausmaß verschiebbar gelagert ist (Fig. 2, 3).

7. Diamagazin nach den Ansprüchen 1 bis 6, dadurch gekennzeichnet, daß der Transporthebel (27) um eine zur Magazin-Längsachse parallele Achse verschwenkbar ist (Fig. 2).

8. Diamagazin nach Anspruch 1 bis 7, dadurch gekennzeichnet, daß der Transporthebel (27) von einer Feder in seine Ruhestellung vorgespannt ist.

9. Diamagazin nach den Ansprüchen 6 bis 8, dadurch gekennzeichnet, daß der eine Schenkel des Transporthebels (27) im Gehäuseboden (2) geführt ist und der andere Schenkel des Transporthebels (27) zwei den Rippen (15, 16) angepaßte Ausnehmungen aufweist (Fig. 3).

10. Diamagazin nach den Ansprüchen 1 bis 9, dadurch gekennzeichnet, daß die Mitnehmerfläche (29) des Transporthebels (27) im wesentlichen senkrecht zur benachbarten Schrägfläche (30) der Ablenkeinrichtung (7) verläuft (Fig. 1).

11. Diamagazin nach den Ansprüchen 1 bis 10, dadurch gekennzeichnet, daß die Durchtrittsöffnung (20) zur Gehäuseaußenseite erweitert ist.

12. Diamagazin nach den Ansprüchen 1 bis 11, dadurch gekennzeichnet, daß jede Andruckvorrichtung einen zur Ablenkeinrichtung (7) vorgespannten, in Gehäuselängsrichtung verschiebbar gelagerten Block (13, 14) aufweist, dessen zur Ablenkeinrichtung (7) weisende Fläche parallel zur zugeordneten Schrägfläche (30, 31) der Ablenkeinrichtung (7) verläuft (Fig. 1).

13. Diamagazin mit einem im wesentlichen schachtelförmigen, oben offenen Gehäuse (1), für ein Diavorführgerät mit einer einen horizontal betätigten Diaschieber (S) aufweisenden Bildwechseleinrichtung, mit einer etwa in Längsmitte einer Längswand (3) des Gehäuses (1) ausgebildeten und der Dicke eines Diapositives (10) angepaßten Durchtrittsöffnung (20), mit einer Ablenkeinrichtung (7), welche eine schräg zur Längsmittelebene des Gehäuses (1) verlaufende Ablenkfläche (17) aufweist und der Durchtrittsöffnung (20) gegenüberliegt, und mit einer zu beiden Seiten der Ablenkeinrichtung (7) angeordneten Andruckeinrichtung für Diapositive, dadurch gekennzeichnet, daß im Bereich der Ablenkeinrichtung (7) ein quer zur Längsmittelebene aus einer Ruhestellung in eine Arbeitsstellung bewegbarer Transporthebel (27) mit einer mit dem Diaschieber (S) der Bildwechseleinrichtung des Vorführgerätes zusammenwirkenden Angriffsfläche (48) vorgesehen ist, die bei in das Vorführgerät eingesetztem Diamagazin und in Ruhestellung des Transporthebels (27) in die Bahn des Diaschiebers (S) ragt bzw. in Arbeitsstellung des Transporthebels (27) in eine Position außerhalb dieser Bahn bewegt wird, um dem Diaschieber (S) das Durchschieben eines Diapositives (10) zu ermöglichen, daß der Transporthebel (27) eine über die Ablenkeinrichtung (7) vorspringende Mitnehmerfläche (29) für das Diapositiv (10) aufweist, daß die Ablenkeinrichtung (7) von einer vorzugsweise begrenzt schwenkbar im Gehäuse (1) gelagerten Platte (35) gebildet ist, wobei der Transporthebel (27) an der Platte befestigt ist, und daß der der Durchtrittsöffnung (20) näher liegende Teil (18) der Ablenkfläche (17) als an einer an der Platte (35) federnd angeordnete, insbesondere einteilig angeformte Zunge (44) ausgebildet ist (Fig. 5 bis 10).

14. Diamagazin nach Anspruch 13, dadurch gekennzeichnet, daß die Platte (35) zur schwenkbaren Lagerung Steckzapfen (36) aufweist, die in entsprechende Ausnehmungen (37) des Gehäuses (1) mit Spiel eingreifen.

15. Diamagazin nach Anspruch 13 oder 14, dadurch gekennzeichnet, daß die Platte (35) zur Durchtrittsöffnung (20) hin verjüngt ist.

16. Diamagazin nach den Ansprüchen 13 bis 15, dadurch gekennzeichnet, daß an der Platte (35) eine Führung (45) für den Diaschieber (S) vorgesehen ist.

17. Diamagazin nach Anspruch 16, dadurch gekennzeichnet, daß die Führung (45) an ihrem der Durchtrittsöffnung (20) abgekehrten Ende erweitert ist.

18. Diamagazin nach den Ansprüchen 13 bis 17, dadurch gekennzeichnet, daß der an der Platte (35) schwenkbar angebrachte Transporthebel (27) an seinem freien Ende in einem Führungsschlitz (54) der Platte (35) geführt ist.

19. Diamagazin nach den Ansprüchen 13 bis 18, dadurch gekennzeichnet, daß der Transporthebel (27) im Bereich der Mitnehmerfläche (29) keilförmig gestaltet ist.

20. Diamagazin nach den Ansprüchen 13 bis 19, dadurch gekennzeichnet, daß die Platte (35) an ihrer der Zufuhrseite der Diapositive entsprechenden Seite einen Anschlag (55) für das jeweils vorderste Diapositiv aufweist, an den eine Schrägfläche (56) anschließt.

21. Diamagazin nach den Ansprüchen 13 bis 20, dadurch gekennzeichnet, daß die Mitnehmerfläche (29) konvex in Richtung zur Durchtrittsöffnung (20) gekrümmt ist.

22. Diamagazin nach den Ansprüchen 13 bis 21, dadurch gekennzeichnet, daß die Durchtrittsöffnung (20) zur Gehäuseinnenseite erweitert ist.

23. Diamagazin nach den Ansprüchen 13 bis 22, dadurch gekennzeichnet, daß die der Abfuhrseite der Ablenkeinrichtung (7) zugeordnete Andruckeinrichtung (14) mit einer schrägen Führungsrippe (58) od. dgl. versehen ist.

24. Diamagazin nach den Ansprüchen 1 bis 23, dadurch gekennzeichnet, daß die Andruckeinrichtungen (13, 14) auf dem Boden (2) des Gehäuses (1) auf zwei Gleitkufen (59) aufruhen.

25. Diamagazin nach den Ansprüchen 1 bis 24, dadurch gekennzeichnet, daß das Gehäuse (1) mit wenigstens einem insbesondere justierbaren, an sich bekannten Anschlag versehen ist, der zur Einstellung der Relativlage der Durchtrittsöffnung (20) bezüglich des Diakanales des Vorführgerätes dient.

**Claims**

1. A slide magazine comprising a substantially box-shaped open-topped housing (1) for a slide projector comprising a picture changer including a horizontally actuated slide pusher (S), said slide magazine comprising a passage opening (20), which is formed approximately at the length centre of a longitudinal wall (3) of the housing (1) and matches the thickness of a slide (10), further comprising a deflector (7), which has a deflecting surface (17) that is oblique to the longitudinal centre plane of the housing (1) and registers with the passage opening (20), and also comprising a slide printer disposed on both sides of the deflector (7), characterized in that a feed lever (27) is provided, which is disposed adjacent to the deflector (7) and in a direction which is transverse to the longitudinal centre plane is movable from a position of rest to an operative position and has an engaging surface, which cooperates with the slide pusher (S) of the picture changer of the projector and protrudes into the path for the slide pusher (S) when the slide magazine has been inserted into the projector and the feed lever (27) is in position of rest, whereas said engaging surface is moved to a position outside said path when the feed lever (27) is in its operative position so that a slide (10) can then be pushed through by the slide pusher (S), the feed lever (27) has for the slide (10) a coupling surface (29), which projects beyond the deflector (7), and the deflector (7) is bounded on its sides by oblique surfaces (30, 31), which converge towards the passage opening (20), and along a plane which extends through the centre of the passage opening (20) and at right angles to the longitudinal centre plane is divided into two superimposed ribs (15, 16), each of which comprises a part (18, 19) of the deflecting surface (17) (Figures 1 to 4).

2. A slide magazine according to claim 1, characterized in that two restraining members (21), which are strained against each other and are movable at least parallel to the longitudinal centre plane, are disposed in the passage opening (20) (Figures 1, 4).

3. A slide magazine according to claim 2, characterized in that each restraining member (21) is constituted by a U-shaped bent end portion of a spring wire (22), which is secured at a distance from the passage opening (20) (Figure 1).

4. A slide magazine according to claim 3, characterized in that each spring wire (22) is L-shaped, one leg, which is substantially at right angles to the housing bottom, carries the restraining member (21) and is freely rotatably mounted at a distance from the restraining member, and the other leg is disposed over the restraining member (21) and directed away from the passage opening (20) (Figure 4).

5. A slide magazine according to claim 3 or 4, characterized in that each spring wire (22) is attached to a plate (23), which is connected to the housing (1) (Figure 4).

6. A slide magazine according to claims 1 to 5, characterized in that the feed lever (27) is L-shaped and is mounted in the housing (1) for a displacement to a predetermined extent (Figure 2).

7. A slide magazine according to claims 1 to 6, characterized in that the feed lever (27) is pivoted on an axis that is parallel to the longitudinal axis of the magazine (Figure 2).

8. A slide magazine according to claims 1 to 7, characterized in that the feed lever (27) is urged by a spring to its position of rest.

9. A slide magazine according to claims 6 to 8, characterized in that one leg of the feed lever (27) is guided in the housing bottom (2) and the other leg of the feed lever (27) has two openings which conform to the ribs (15, 16) (Figure 3).

10. A slide magazine according to claims 1 to 9, characterized in that the coupling surface (29) of the feed lever (27) is substantially at right angles to the adjacent oblique surface (30) of the deflector (7) (Figure 1).

11. A slide magazine according to claims 1 to 10, characterized in that the passage opening (20) is enlarged towards the outside of the housing.

12. A slide magazine according to claims 1 to 11, characterized in that each pressure-applying device comprises a block (13, 14), which is prestressed towards the deflector (7) and mounted for a displacement in the longitudinal direction of the housing and has a surface which faces deflector (7) and is parallel to the associated oblique surface (30, 31) of the deflector (7) (Figure 1).

13. A slide magazine comprising a substantially box-shaped open-topped housing (1) for a slide projector comprising a picture changer including a horizontally actuated slide pusher (S), said magazine comprising a passage opening (20), which is formed approximately at the length centre of a longitudinal wall (3) of the housing (1) and matches the thickness of a slide (10), further comprising a deflector (7), which has a deflecting surface (17) that is oblique to the longitudinal centre plane of the housing (1) and registers with the passage opening (20), and also comprising means for applying pressure to the slide on both sides of the deflector (7), characterized in that a feed lever (27) is provided, which is disposed adjacent to the deflector (7) and in a direction which is transverse to the longitudinal centre plane is movable from a position of rest to an operative position and has an engaging surface (48), which cooperates with the slide pusher (S) of the picture changer of the projector and protrudes into the path for the slide pusher (S) when the slide magazine has been inserted into the projector and the feed lever (27) is in position of rest, whereas said engaging surface is moved to a position outside said path when the feed lever (27) is in its operative position so that a slide (10) can then be pushed through by the slide pusher (S), the feed lever (27) has for the slide (10) a coupling surface (29), which projects beyond the deflector (7), and the deflector (7) is constituted by a plate (35), which is mounted in the housing (1) for a pivotal movement, preferably to a limited extent, the feed lever (27) is secured to the plate, and the part (18) of the deflecting surface (17) which is nearer to the passage opening (20) constitutes a tongue (44), which is resiliently carried by and particularly integrally formed with the plate (35) (Figures 5 to 10).

14. A slide magazine according to claim 13, characterized in that the plate (35) comprises plug pins (36), which serve for a pivotal mounting and extend with a play into corresponding openings (37) of the housing (1).

15. A slide magazine according to claims 13 or 14, characterized in that the plate (35) is tapered towards the passage opening (20).

16. A slide magazine according to claims 13 to 15, characterized in that the plate (35) is provided with a track (45) for the slide pusher (S).

17. A slide magazine according to claim 16, characterized in that the track (45) is enlarged in width at that end which is remote from the passage opening (20).

18. A slide magazine according to claims 13 to 17, characterized in that the feed lever (27) which is pivoted to the plate (35) is guided at its free end in a guide slot (54) of the plate (35).

19. A slide magazine according to claims 13 to 18, characterized in that the feed lever (27) is wedge-shaped adjacent to the coupling surface (29).

20. A slide magazine according to claims 13 to 19, characterized in that the plate (35) is provided with a stop (55) on the side on which the slides are received and said stop is engageable for the leading slide and is succeeded by an oblique surface (56).

21. A slide magazine according to claims 13 to 20, characterized in that the coupling surface (29) is convexly curved towards the passage opening (20).

22. A slide magazine according to claims 13 to 21, characterized in that the passage opening (20) is enlarged in width towards the inside of the housing.

23. A slide magazine according to claims 13 to 22, characterized in that the pressure-applying means (14) are associated with the delivery side of the deflector (7) and are provided with an oblique guide rib (58) or the like.

24. A slide magazine according to claims 1 to 23, characterized in that the pressure-applying devices (13, 14) rest on two skids (59) on the bottom (2) of the housing (1).

25. A slide magazine according to claims 1 to 24, characterized in that the housing (1) is provided with at least one stop, which is known per se and is preferably adjustable and which serves to adjust the position of the passage opening (20) relative to the slide channel of the projector.

**Revendications**

1. Magasin de diapositives comprenant un boîtier (1) substantiellement à la manière d'une boîte ouverte en haut destiné à un projecteur de diapositives, comportant un dispositif de changement d'image présentant un poussoir de diapositives (S) actionné horizontalement, ledit magasin de diapositives comportant une ouverture de passage (20) qui est formée approximativement au centre de la longueur d'une paroi longitudinale (3) du boîtier (1) et correspond à l'épaisseur de la diapositive (10), comportant par ailleurs un déflecteur (7) qui a une surface de déflexion (17) qui s'étend obliquement par rapport au plan central longitudinal du boîtier (1) et se trouve en face de l'ouverture de passage (20), comportant en outre un dispositif de pression des diapositives disposé des deux côtés du déflecteur (7), caractérisé en ce que dans la zone du déflecteur (7) un levier de transport (27) est prévu qui est disposé à côté du déflecteur (7) et qui peut être déplacé dans une direction qui est transversale par rapport au plan central longitudinal à partir d'une position de repos en une position opérationnelle et possède une surface d'engagement qui coopère avec le poussoir de diapositives (S) du dispositif de changement d'image du projecteur et s'étend dans le passage du poussoir de diapositives (S) lorsque le magasin de diapositives a été inséré dans le projecteur et que le levier de transport (27) est en position de repos alors que ladite surface d'engagement est déplacée dans une position à l'extérieur dudit passage lorsque le levier de transport (27) est dans sa position opérationnelle de sorte qu'une diapositive (10) peut alors être poussée à travers le passage par le poussoir de diapositive (S), que le levier de transport (27) a une surface d'embrayage (29) pour la diapositive (10), qui s'étend au-delà du déflecteur (7), et que le déflecteur (7) est limité en ses côtés par des surfaces obliques (30, 31) qui convergent vers l'ouverture du passage (20), et le long d'un plan qui s'étend à travers le centre de l'ouverture de passage (20), est subdivisé à angle droit par rapport au plan central longitudinal en deux rainures superposées (15, 16) dont chacune comprend une partie (18, 19) de la surface de déflexion (17) (figures 1 à 4).

2. Magasin de diapositives selon la revendication 1, caractérisé en ce que deux éléments de retenue (21) qui sont réciproquement contraints et peuvent être déplacés au moins parallèlement par rapport au plan central longitudinal sont disposés dans l'ouverture de passage (20) (figures 1, 4).

3. Magasin de diapositives selon la revendication 2, caractérisé en ce que chaque élément de retenue (21) est constitué par une extrémité en forme de U d'un fil de ressort (22) qui est fixé à une certaine distance de l'ouverture de passage (20) (figure 1).

4. Magasin de diapositives selon la revendication 3, caractérisé en ce que chaque fil de ressort (22) est en forme de L, une branche, qui est substantiellement à angle droit par rapport au fond du boîtier portant l'élément de retenue (21) et est montée de manière à pouvoir tourner librement à une certaine distance du membre de retenue, l'autre branche étant disposée au-dessus de l'élément de retenue (21) et est dirigée en s'écartant de l'ouverture de passage (20) (figure 4).

5. Magasin de diapositives selon les revendications 3 ou 4, caractérisé en ce que chaque fil de ressort (22) est attaché à une platine (23) qui est connectée avec le boîtier (1) (figure 4).

6. Magasin de diapositives selon l'une des revendications 1 à 5, caractérisé en ce que le levier de transport (27) est en forme de L et est monté dans le boîtier (1) pour être déplacé sur une distance déterminée (figure 2).

7. Magasin de diapositives selon les revendications 1 à 6, caractérisé en ce que le levier de transport (27) est pivoté sur un axe qui est parallèle à l'axe longitudinal du magasin (figure 2).

8. Magasin de diapositives selon les revendications 1 à 7, caractérisé en ce que le levier de transport (27) est pressé par un ressort dans sa position de repos.

9. Magasin de diapositives selon les revendications 6 à 8, caractérisé en ce qu'une branche du levier de transport (27) est guidée dans le fond du boîtier (2) et que l'autre branche du levier de transport (27) présente deux échancrures adaptées aux rainures (15, 16) (figure 3).

10. Magasin de diapositives selon les revendications 1 à 9, caractérisé en ce que la surface d'embrayage (29) du levier de transport (27) est substantiellement à angle droit par rapport à la surface oblique adjacente (30) du déflecteur (7) (figure 1).

11. Magasin de diapositives selon les revendications 1 à 10, caractérisé en ce que l'ouverture de passage est évasée (20) vers le côté extérieur du boîtier.

12. Magasin de diapositives selon les revendications 1 à 11, caractérisé en ce que chaque dispositif d'application de la pression comporte un bloc (13, 14) qui est précontraint vers le déflecteur (7) et est monté pour le déplacement dans le sens longitudinal du boîtier et qui possède une surface qui fait face au déflecteur (7) et est parallèle à la surface oblique associée (30, 31) du déflecteur (7) (figure 1).

13. Magasin de diapositives comprenant un boîtier (1) substantiellement à la manière d'une boîte ouverte en haut destiné à un projecteur, comportant un dispositif de changement d'image présentant un poussoir de diapositives (S) actionné horizontalement, ledit magasin de diapositives comportant une ouverture de passage (20) qui est formée approximativement au centre de la longueur d'une paroi longitudinale (3) du boîtier (1) et correspond à l'épaisseur de la diapositive (10), comportant par ailleurs un déflecteur (7) qui a une surface de déflexion (17) qui s'étend obliquement par rapport au plan central longitudinal du boîtier (1) et se trouve en face de l'ouverture de passage (20), comportant en outre un dispositif de pression des diapositives disposé des deux côtés du déflecteur (7), caractérisé en ce que dans la zone du déflecteur (7) un levier de transport (27) est prévu qui est disposé à côté du déflecteur (7) et qui peut être déplacé dans une direction qui est transversale par rapport au plan central longitudinal à partir d'une position de repos en une position opérationnelle et possède une surface d'engagement (48) qui coopère avec le poussoir de diapositives (S) du dispositif de changement d'image du projecteur et s'étend dans le passage du poussoir de diapositives (S) lorsque le magasin de diapositives a été inséré dans le projecteur et que le levier de transport (27) est en position de repos alors que ladite surface d'engagement est déplacée dans une position à l'extérieur dudit passage lorsque le levier de transport (27) est dans sa position opérationnelle de sorte qu'une diapositive (10) peut alors être poussée à travers le passage par le poussoir de diapositive (S), que le levier de transport (27) a une surface d'embrayage (29) pour la diapositive (10), qui s'étend au-delà du déflecteur (7), et que le déflecteur (7) est constitué par une plaque (35) qui est montée dans le boîtier (1) pour effectuer un mouvement pivotant, de préférence à course limitée, le levier de transport (27) étant fixé à la plaque, et que la partie (18) de la surface de déflexion (17) qui est plus proche de l'ouverture de passage (20) constitue une langue (44)· qui est disposée de manière élastique et forme notamment une seule pièce avec la plaque (35) (figures 5 à 10).

14. Magasin de diapositives selon la revendication 13, caractérisé en ce que la plaque (35) comporte des pointes enfichables (36) qui servent au montage pivotant et s'étendent avec un certain jeu dans les échancrures correspondantes (37) du boîtier (1).

15. Magasin de diapositives selon les revendications 13 ou 14, caractérisé en ce que la plaque (35) va s'effilant vers l'ouverture de passage (20).

16. Magasin de diapositives selon les reventications 13 à 15, caractérisé en ce que la plaque (35) est pourvue d'un guidage (45) pour le poussoir de diapositives (S).

17. Magasin de diapositives selon la revendication 16, caractérisé en ce que le guidage (45) est évasé à l'extrémité qui est à l'opposé de l'ouverture de passage (20).

18. Magasin de diapositives selon les revendications 13 à 17, caractérisé en ce que le levier de transport (27) qui est fixé de manière à pouvoir pivoter sur la plaque (35) est guidé en son extrémité libre dans une fente de guidage (54) de la plaque (35).

19. Magasin de diapositives selon les revendications 13 à 18, caractérisé en ce que le levier de transport (27) a une forme de coin à proximité de la surface d'embrayage (29).

20. Magasin de diapositives selon les revendications 13 à 19, caractérisé en ce que la plaque (35) est pourvue d'une butée (55) du côté de l'admission des diapositives, ladite butée pour la diapositive en tête étant suivie d'une surface oblique (56).

21. Magasin de diapositives selon les revendications 13 à 20, caractérisé en ce que la surface d'embrayage (29) est courbée de manière convexe vers l'ouverture de passage (20).

22. Magasin de diapositives selon les revendications 13 à 21, caractérisé en ce que l'ouverture de passage (20) est évasée vers l'intérieur du boîtier.

23. Magasin de diapositives selon les revendications 13 à 22, caractérisé en ce que le dispositif d'application de la pression (14) est associé à la sortie d'évacuation du déflecteur (7) et est pourvu d'une rainure de guidage oblique (58) ou d'un dispositif semblable.

24. Magasin de diapositives selon les revendications 1 à 23, caractérisé en ce que les dispositifs d'application de la pression (13, 14) reposent sur deux patins (59) sur le fond (2) du boîtier (1).

25. Magasin de diapositives selon les revendications 1 à 24, caractérisé en ce que le boîtier (1) est pourvu d'au moins une butée, connue en soi, de préférence ajustable et qui sert à adapter la position de l'ouverture de passage (20) par rapport au canal de diapositives du projecteur.

FIG. 1

FIG. 2

FIG. 3

FIG. 4

FIG. 5

FIG. 6A

FIG. 6

FIG. 7  FIG. 8  FIG. 9  FIG.10